# EUROPÄISCHE PATENTANMELDUNG

(11) **EP 2 399 711 A1**
(43) Veröffentlichungstag der Anmeldung: **28.12.2011**
(21) Anmeldenummer: 11167056.8
(22) Anmeldetag: 23.05.2011
(51) Int. Cl.: B25B 23/14

(54) **Schrauber und Steuerungsverfahren**

(30) Priorität: 23.06.2010 DE 102010030410
(71) Anmelder: HILTI Aktiengesellschaft, 9494 Schaan (LI)
(72) Erfinder: Kuntner, Jochen, 6850, Dornbirn (AT); Schmidt, Peer, 88131 Lindau (DE)

(57) **Zusammenfassung**

Ein Steuerungsverfahren für einen Schrauber beinhaltet folgende Schritte. Eine Spindel (**14**) wird mittels eines Motors (**11**) zum Drehen einer Schraube (**19**) um eine Drehachse (**15**) angetrieben. Ein Magnetfeld wird um die sich drehende Schraube (**19**) erzeugt. Eine durch die sich drehende Schraube (**19**) hervorgerufene Modulation des Magnetfelds wird erfasst. Ein Abstellkriterium wird basierend auf der erfassten Modulation durch eine Schraubenerkennungseinrichtung (**28**) ausgewählt. Das Drehens der Schraube (**19**) wird durch eine Abstelleinrichtung (**24**) beendet, sobald das Abstellkriterium erfüllt ist.

## Beschreibung

### GEBIET DER ERFINDUNG

Die vorliegende Erfindung betrifft einen Schrauber und ein Steuerungsverfahren für einen Schrauber.

Im Baugewerbe werden Schrauben unter anderem zum Befestigen von Blechen verwendet. Hierfür wurden Schrauben mit einer Bohrspitze entwickelt, die ein Loch in das Blech bohren, bevor das Gewinde der Schraube und abschließend der Kopf das Blech an einem Untergrund befestigen. Der Anwender versucht den Schaubvorgang zu beenden, wenn der Schraubenkopf auf dem Blech anliegt. Hierbei wird er durch eine Rutschkupplung unterstützt, welche ab einem richtig einzustellenden Auslöse-Drehmoment die Kraftübertragung unterbricht. Der Anwender hat Sorge zu tragen, dass für jeden verwendeten Schraubentyp das richtige Auslöse-Drehmoment eingestellt ist.

### OFFENBARUNG DER ERFINDUNG

Eine Aufgabe besteht darin, die Bedienung zu vereinfachen.

Der erfindungsgemäße Schrauber hat einen Motor und eine Spindel, die mit dem Motor zum Drehen einer Schraube um eine Drehachse gekoppelt ist. Eine einstellbare Abstelleinrichtung dient zum Abstellen der Drehbewegung der Spindel. Ein aktiver Magnetfeldsensor ist derart angeordnet, dass eine durch die sich drehende Schraube hervorgerufene Modulation eines von dem aktiven Magnetfeldsensor erzeugten Magnetfeldes durch den aktiven Magnetfeldsensor erfassbar ist. Eine Schraubenerkennungseinrichtung ist zwischen den aktiven Magnetfeldsensor und die einstellbare Abstelleinrichtung geschaltet, um ein Abstellkriterium der Abstelleinrichtung basierend auf der von dem aktiven Magnetfeldsensor erfassten Modulation einzustellen.

Das erfindungsgemäße Steuerungsverfahren für einen Schrauber beinhaltet die folgenden Schritte. Eine Spindel wird mittels eines Motors zum Drehen einer Schraube um eine Drehachse angetrieben. Ein Magnetfeld wird um die sich drehende Schraube erzeugt und eine durch die sich drehende Schraube hervorgerufene Modulation des Magnetfelds mittels eines aktiven Magnetfeldsensors erfasst. Ein Abstellkriterium wird basierend auf der erfassten Modulation durch eine Schraubenerkennungseinrichtung ausgewählt. Das Drehen der Schraube wird durch eine Abstelleinrichtung beendet, sobald das Abstellkriterium erfüllt ist.

Der aktive Magnetfeldsensor generiert sich selbst ein Magnetfeld. Die Schrauben werden anhand ihres passiven Einflusses auf das Magnetfeld unterschieden.

Eine Besonderheit der Vorrichtung und des Verfahrens ist, dass das Erkennen einer Schraube bzw. das Ermitteln von Abstellkriterien erfolgt, wenn sich die Schraube dreht. Das Erkennen kann somit während des Setzens der Schraube erfolgen. Die Abstelleinrichtung wird somit individuell für jede gerade zu setzende Schraube eingestellt.

Ein magnetfeldsensitives Sensorelement des aktiven Magnetfeldsensors kann derart angeordnet sein, dass das induktive Sensorelement in Richtung der Drehachse mit einem Schraubenkopf der Schraube überlappt. Das induktive Sensorelement soll vorzugsweise Prägungen an einer Unterseite der Schraube erfassen. Das magnetfeldsensitive Sensorelement kann beispielsweise ein induktives Sensorelement sein, in welchem in Abhängigkeit des Magnetfeldes ein Strom generiert wird. Das magnetfeldsensitives Sensorelement kann einen elektromagnetischen Schwingkreis enthalten, dessen Resonanzfrequenz oder dessen Dämpfung durch das gemessene Magnetfeld beeinflusst. Eine weitere Variante nutzt einen Hallsensor als Sensorelement.

Eine Ausgestaltung sieht vor, dass der aktive Magnetfeldsensor einen Elektromagneten aufweist, welcher an einem werkzeugseitigen Ende der Spindel angeordnet ist.

Eine Ausgestaltung sieht vor, dass die Abstelleinrichtung mit dem Motor zum Abstellen des Motors elektrisch gekoppelt ist. Die Abstelleinrichtung deaktiviert den Motor bei Erfüllen des Abstellkriteriums.

Eine Ausgestaltung sieht vor, dass eine elektrisch betätigbare Kupplung in einen Kraftpfad zwischen Motor und Spindel geschaltet ist und die Abstelleinrichtung zum Schalten der Kupplung mit der Kupplung elektrisch verbunden ist. Die Abstelleinrichtung übermittelt ein Steuersignal zum Lösen an die Kupplung zwischen Motor und Spindel bei Erfüllen des Abstellkriteriums zum Abstellen des Drehens der Schraube.

Bei einer Ausgestaltung ist ein Überwachungssensor vorgesehen. Mit dem Überwachungssensor ist ein Signal als Maß für einen Abstand der Spindel zu einem Werkstück und/oder ein Signal als Maß für ein auf die Spindel übertragenes Drehmoment erfassbar. Die Abstelleinrichtung ist mit dem Überwachungssensor zum Vergleichen des Signals mit dem Abstellkriterium gekoppelt. Das Abstellen des Drehens sollte erfolgen, wenn die Schraube ausreichend tief in ein Werkstück geschraubt ist, d.h. der Abstand zwischen Werkzeug und Werkstück einen durch das Abstellkriterium vorgegebenen Schwellwert unterschreitet. Alternativ oder zusätzlich erfolgt ein Abstellen, wenn ein ansteigendes Drehmoment anzeigt, dass ein Schraubenkopf auf dem Werkstück aufliegt.

Eine Ausgestaltung sieht vor, dass die Schraubenerkennungseinrichtung einen Frequenzanalysator zum Bestimmen eines Spektrums der Modulation aufweist. Ein Frequenzspektrum der Modulation wird ermittelt und das Abstellkriterium wird basierend auf dem Frequenzspektrum ausgewählt. Das Bestimmen des Frequenzspektrums erfordert zwar mehrere Umdrehungen der Schraube und damit Zeit, im Gegenzug erweist sich das Auswerten des Spektrums aber als robuster gegenüber Störungen als eine Auswertung der Modulation im Zeitbereich.

Eine Ausgestaltung sieht vor, dass die Schraubenerkennungseinrichtung eine Speichereinrichtung mit darin gespeicherten parametrisierten Modulationen und den parametrisierten Modulationen zugeordnete gespeicherte Abstellkriterium aufweist. Die Schraubenerkennungseinrichtung hat eine Sucheinrichtung zum Auswählen der Abstellkriterien, die einer parametrisierten Modulation zugeordnet sind, welche einer von dem aktiven Magnetfeldsensor erfassten Modulation entsprechen, aufweist. Die Sucheinrichtung ist mit der Abstelleinrichtung gekoppelt, damit die Abstelleinrichtung mit den ermittelten Abstellkriterien einstellbar ist.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: ein Elektroschrauber;
- Fig. 2: einen Längsschnitt durch eine Schraube;
- Fig. 3: eine Untenansicht auf die Schraube;
- Fig. 4: ein Signalverlauf eines Magnetfeldsensors bei der Schraube von Fig. 3;
- Fig. 5: ein Spektrum zu dem Signalverlauf von Fig. 4;

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

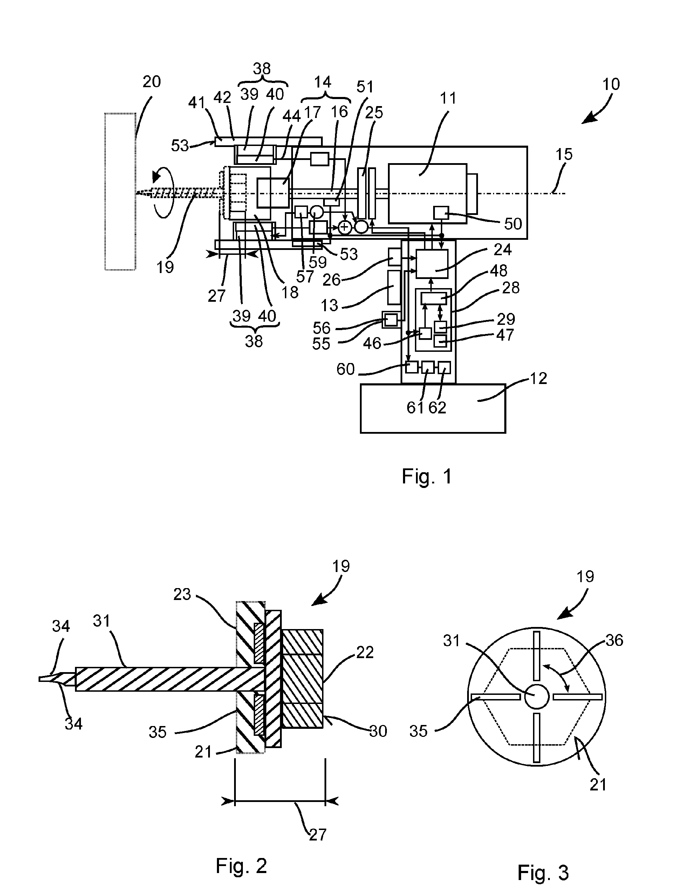

Fig. 1 zeigt einen beispielhaften handgehaltenen, motorgetriebenen Schrauber **10.** Der Schrauber **10** hat einen Motor **11,** der beispielsweise durch einen elektrischen Akkumulator **12** gespeist ist. Wenn ein Anwender einen Taster **13** betätigt, wird darauf ansprechend der Motor **11** aktiviert. Der Motor **11** treibt eine Spindel **14** um eine Drehachse **15** an. Die Spindel **14** beinhaltet eine Abtriebswelle **16,** deren werkzeugseitiges Ende eine Werkzeugaufnahme **17** oder/und ein integriertes Werkzeug aufweist. In die Werkzeugaufnahme **17** kann lösbar ein Werkzeug **18,** z.B. eine Nuss oder ein Schrauberbit, eingesetzt werden. Das integrierte Werkzeug kann beispielsweise eine Nuss zur Aufnahme eines standardisierten sechseckigen Schraubenkopfs sein. An Anwender steckt manuell eine Schraube **19** auf ein Werkzeug in der Werkzeugaufnahme **17** oder das integrierte Werkzeug auf. Beim Drehen der Spindel **14** wird die Schraube **19** ebenfalls um die Drehachse **15** gedreht. Das Aufstecken der Schraube **19** auf eines der Werkzeuge kann auch automatisch oder semiautomatisch durch einen Magazinaufsatz erfolgen.

Der Schrauber **10** enthält eine Bedienungshilfe für ein automatisches Setzen von Schrauben **19** in ein Werkstück **20.** Nach einem Setzen soll die Schraube **19** mit einer Unterseite **21** ihres Schraubenkopfs **22** an dem Werkstück **20** anliegen. Gegebenfalls ist zwischen der Unterseite **21** und dem Werkstück **20** noch eine Zwischenlegscheibe **23** angeordnet, z.B. als Dichtring aus Silikon. Ein Anpressdruck des Schraubenkopfs **22** auf das Werkstück **20** ist moderat, um schädigende Spannungen in der Schraube **19** zu vermeiden. Ferner soll, falls vorhanden, die Zwischenlegscheibe **23** nur in Position gehalten und nicht zerquetscht werden.

Die Bedienungshilfe basiert auf einer Abstelleinrichtung **24,** die ein Abstellen der getriebenen Drehbewegung der Spindel **14** bewirkt. Dazu kann beispielsweise der Motor **11** abgeschaltet werden. Alternativ ist eine Kupplung **25** zwischen Motor **11** und Spindel **14** angeordnet, die durch die Abstelleinrichtung **24** zum Unterbrechen der Drehmomentübertragung gelöst werden kann, um die Drehbewegung der Spindel **14** abzuschalten. Die Kupplung **25** kann beispielsweise eine Magnetkupplung sein, welches sich durch ein Stellsignal der Abstelleinrichtung **24** betätigen lässt. Die Kupplung 25 kann auch eine andere fremdgeschaltete Kupplung wie z.B. eine elektromagnetische Schlingfederkupplung sein.

Das Erkennen des Zeitpunkts für das Abstellen durch die Abstelleinrichtung **24** kann auf wenigstens einer der beiden folgenden Varianten basieren. (a) Der Schrauber 10 überprüft als Abstellkriterium eine Setztiefe der Schraube **19** und schaltet das Weiterdrehen der Spindel **14** ab, sobald die Setztiefe eine vorgegeben Tiefe erreicht hat. (b) Der Schrauber **10** überwacht als Abstellkriterium ein von der Spindel **14** ausgeübtes Drehmoment und beendet das Weiterdrehen, wenn das Drehmoment eine charakteristische Signatur für die gesetzte Schraube **19** aufweist. Die charakteristische Signatur kann ein Überschreiten eines Schwellwerts durch das momentane Drehmoment oder ein Überschreiten des Schwellwerts durch eine Anstiegsrate des Drehmoments sein.

Der Schrauber 10 kann Bedienungsmittel **26** aufweisen, die dem Anwender ermöglichen die Abstelleinrichtung **24** für eine Schraube **19** einzustellen. Diese Eigenschaften können unter Anderem die Höhe **27** des Schraubenkopfs **22** ggf. einschließlich der Höhe der Zwischenlegscheibe **23** für die Setztiefe, ein maximal zulässiges Drehmoment für die Drehmomentüberwachung etc. sein. Die Abstelleinrichtung **24** wandelt die eingegebenen Größen in entsprechende Abstellkriterien um.

Eine Schraubenerkennungseinrichtung **28** unterstützt den Anwender bei dem Einstellen der Abstellkriterien für die Bedienungshilfen. Die Schraubenerkennungseinrichtung **28** erkennt einen Schraubentyp einer von dem Schrauber **10** gedrehten Schraube **19.** In einer Speichereinrichtung **29** der Schraubenerkennungseinrichtung **28** sind zu den Schraubentypen die jeweiligen Abstellkriterien für die Abstelleinrichtung **24** abgelegt. Sobald die Schraubenerkennungseinrichtung **28** einen Schraubentyp bestimmt hat, wird das dem Schraubentyp zugehörige Abstellkriterium aus der Speichereinrichtung **29** ausgewählt und die Abstelleinrichtung **24** entsprechend dem ausgewählten Abstellkriterium eingestellt. Das Einstellen der Abstellkriterien kann vollautomatisch ohne Interaktion mit einem Anwender erfolgen. Alternativ wird der Anwender vor dem Einstellen des Abstellkriteriums zu einer Bestätigung aufgefordert, bevor diese von der Abstelleinrichtung **24** übernommen werden.

Bevor eine beispielhafte Schraubenerkennungseinrichtung **28** im Detail erläutert wird, werden besonders geeignete Schrauben **19** beschrieben. Der Schraubenkopf **22** einer gesetzten Schraube **19** bleibt in vielen Anwendungsgebieten von oben sichtbar. Aus mehreren Gründen sind daher sichtbare Erkennungsmerkmale an der Oberseite **30** der Schraube **19** nicht erwünscht.

Fig. 2 zeigt einen Längsschnitt durch einen beispielhaften Aufbau einer schneidenden Schraube **19.** Fig. 3 zeigt die Schraube **19** in einer Ansicht von unten. Die Schraube **19** weist einen Schraubenkopf **22,** ein Gewinde **31** und eine Spitze **32** längs einer Achse **33** auf. Die Spitze **32** hat ein oder zwei Klingen **34** zum Einbohren in ein metallisches Werkstück, z.B. ein Stahlblech. Die Klingen **34** können das Metall spanend abtragen oder umformen, um ein Loch für das Gewinde **31** zu erzeugen. Die optionale Zwischenlegscheibe **23** aus einem elastischen Kunststoff, zum Beispiel aus Silikon, kann an einer Unterseite **21** des Schraubenkopfes **22** anliegen. Die Zwischenlegscheibe **23** kann als Dichtungselement zum wasserdichten Abschließen des Lochs dienen.

An der Unterseite **21** des Schraubenkopfs **22** sind vier weitgehend identische, radial verlaufende, in axialer Richtung vorstehende Rippen **35** vorgesehen. Jede der Rippen **35** ist einem Winkel **36** von 90 Grad zu seinen benachbarten Rippen **35** angeordnet. Die Unterseite **21** bzw. die Anordnung der Rippen **35** hat folglich eine vierzählige Drehsymmetrie um eine Drehachse **37** der Schraube **19.** Eine n-zählige Drehsymmetrie weist die Unterseite **21** auf, wenn diese gedreht um einen Winkel von 360/n Grad, in dem Beispiel einer vierzählige Drehsymmetrie mit 90 Grad, mit sich selbst zur Deckung kommt.

Die Rippen **35** sind vorzugsweise aus dem gleichen Material wie der der Schraubenkopf **22,** z.B. aus Eisen, Stahl oder einem anderen hart- oder weichmagnetischen Material. Beispielsweise können durch Prägen der Unterseite **21** des Schraubenkopfs **22** die Rippen **35** hergestellt werden. Die Anzahl und Gestalt der Rippen **35** dient als Kodierung für einen Schraubentyp. Die dargestellte Schraube **19** ist nicht limitierend für die Schraubenerkennungseinrichtung **28.** Insbesondere können statt vorstehender Rippen **35** auf Vertiefungen eingeprägt sein. Die geprägten Strukturierungen können ferner ausschließlich nahe des Umfangs des Schraubenkopfs **22** angeordnet sein.

Die Schraubenerkennungseinrichtung **28** basiert auf dem induktiven Erfassen der Rippen 35 mittels eines aktiven Magnetfeldsensors **38.**

Ein Magnetfeldgenerator **39** des aktiven Magnetfeldsensors **38** erzeugt ein Magnetfeld, das die Schraube **19** umgibt. Der Magnetfeldgenerator **39** ist vorzugsweise auf der Höhe des Schraubenkopfs **22** und kann vorzugsweise seitlich beabstandet zu der Drehachse **15** angeordnet sein. In einer alternativen Ausgestaltung umgibt der Magnetfeldgenerator **39** ringförmig die Drehachse **15**. Der Magnetfeldgenerator **39** kann zum Bespiel ein Dauermagnet oder ein Elektromagnet, d.h. eine stromdurchflossene Spule, sein.

Die Schraube **19** und ihre Rippen **35** beeinflussen aufgrund ihrer magnetischen Eigenschaften den Verlauf der Magnetfeldlinien und somit der lokalen Magnetfeldstärke. Ein induktives Sensorelement **40** ist vorzugsweise in Richtung der Drehachse **15** auf der Höhe des Schraubenkopfs **22** angeordnet. Längs der Drehachse **15** betrachtet, überlappen das induktive Sensorelement **40** und der Schraubenkopf **22.** Die Länge der Schrauberbits oder sonstiger Werkzeuge ist weitgehend standardisiert, so dass zumindest die Position der Oberseite **30** des Schraubenkopfs **22** entlang der Drehachse bekannt ist. Das induktive Sensorelement **40** kann beispielsweise in einer Hülse **41** des Tiefenanschlags **42** integriert sein. Das induktive Sensorelement **40** ist vorzugsweise radial beabstandet zu der Drehachse **15** angeordnet und nicht-symmetrisch zu der Drehachse **15** aufgebaut. Eine Achse eines ringförmigen Sensorelements **40** ist versetzt zu der Drehachse **15** angeordnet. Das z. B. induktive Sensorelement **40** kann beispielsweise durch einen Hallsensor, eine Pickup-Spule realisiert sein. Die dargestellte Ausführungsform verwendet mehrere induktive Sensorelemente **40.**

Eine elektrische Verschaltung des Sensorelements **40** erfolgt beispielsweise in einer Wheatstone-Brücke in einer differentiellen Messung. Ein erstes Sensorelement 40 ist zwischen einen Abgriff und eine Einspeisungspunkt und ein gleiches, zweites Sensorelement 40 zwischen einen anderen Abgriff und den anderen Einspeisepunkt geschaltet. In die zwei weiteren Brücken kann ebenfalls ein gleiches Sensorelement geschaltet werden, welches gegen Magnetfelder abgeschirmt ist.

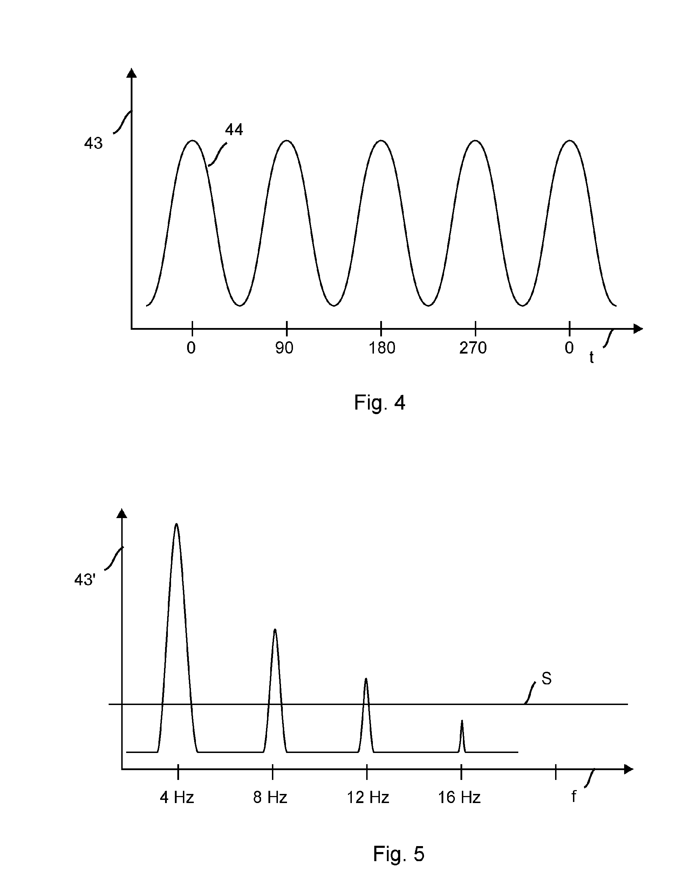

Beim Betätigen des Tasters **13** wird die Schraubenerkennungseinrichtung **28** und der aktive Magnetfeldsensor **38** aktiviert, sofern sie nicht bereits aktiv sind. Der Motor 11 dreht die Spindel **14** mitsamt der Schraube **19** um die Drehachse **15.** Die Rippen **35** nähern und entfernen sich aufgrund der Drehbewegung von dem induktiven Sensorelement **40.** Aufgrund ihrer magnetischen Eigenschaften beeinflussen die Rippen **35** den Verlauf des Magnetfeldes und damit die Stärke des Magnetfeldes im Bereich des induktiven Sensorelements **40.** Fig. 4 zeigt schematisch eine Amplitude **43** eines beispielhaften Signals **44,** welches ein Maß für die Magnetfeldstärke in einem der induktiven Sensorelemente **40** ist. Die Amplitude **43** nimmt jeweils einen Extremwert **45** ein, wenn eine der Rippen **35** in geringstem Abstand zu dem induktiven Sensorelement **40** ist. Aufgrund der vier gleichgestalteten, in äquidistanten Winkeln **36** angeordneten Rippen **35** wiederholt sich das Signal **44** periodisch über die Zeit t. Die Lage der Maxima ist umgerechnet auf die Winkelposition der Spindel **14** angegeben. Ein Frequenzanalysator **46** der Schraubenerkennungseinrichtung **28** ermittelt aus dem Signal **44** ein Frequenzspektrum bzw. den reellen Anteil des Frequenzspektrum ohne Phaseninformation. Das Frequenzspektrum des Signals **44** zeigt einen Beitrag (Peak) bei einer Grundfrequenz **f,** die dem Vierfachen der Drehzahl der Spindel **14** entspricht (Fig. 5). Aufgrund der physischen Breite der Rippen **35** ergeben sich Beiträge bei den Harmonischen der Grundfrequenz **f.** Das Verhältnis der Grundfrequenz **f** zu der Drehzahl ist durch die Anzahl der regelmäßig angeordneten Rippen **35** bestimmt. Die relativen Amplituden **43'** des Spektrums bei der Grundfrequenz und den Harmonischen sind unter Anderem durch die Form der Rippen **35** bestimmt.

Die Schraubenerkennungseinrichtung **28** beinhaltet die Speichereinrichtung **29,** in der Spektren verschiedener Schraubentypen zugeordnet zu Abstellkriterien abgelegt sind. Die geeigneten Schraubentypen unterscheiden sich in ihrer Prägung der Unterseite **21,** insbesondere in der Anzahl der Rippen **35.** Die Kodierung durch die Prägung kann auch auf eine weiche Unterlegscheibe **23** oder andere Besonderheiten hinweisen. Für jede der Schraubentypen wird ein geeignetes Abstellkriterium in Versuchen ermittelt. Die Abstellkriterien für den Schraubentyp können dauerhaft in der Speichereinrichtung **29** abgespeichert werden. Die Speichereinrichtung **29** kann einmalig schreibbare oder wiederbeschreibbare Speicherzellen aufweisen. Eine entsprechende drahtgebundene oder drahtlose Kommunikationsschnittstelle **47** kann an oder in dem Schrauber **10** vorgesehen sein.

Die Schraubenerkennungseinrichtung **28** sucht mittels einer Sucheinrichtung **48** in den gespeicherten Spektren eines, das mit dem aus dem Signal **44** ermittelten Spektrum übereinstimmt. Als Kriterien für den Vergleich können die absoluten Frequenzen dienen, bei welchen das Spektrum ein Maximum aufweist. Eine Normierung der Frequenz erfolgt vorzugsweise auf die Drehzahl der Abtriebswelle **16.** Ein Drehzahlmesser **49** ermittelt dazu die Drehzahl der Abtriebswelle **16** und/oder des Motors **11.** Bei dem in Fig. 5 dargestellten Beispiel ist die Drehzahl 1 Hz und signifikante Amplituden treten bei 4 Hz und 8 Hz auf, welche normiert auf die Drehzahl bei 4 und 8 liegen. Ein Schwellwert **S** für die Amplitude **43'** kann verwendet werden, um Beiträge vom Rauschen auf das Spektrum zu unterdrücken. Der Schwellwert **S** kann beispielsweise dynamisch basierend auf dem absoluten Maximum des Spektrums festgelegt werden, z. B. auf 10% oder 20% des absoluten Maximums.

Das dem ausgewählten Spektrum zugeordnet Abstellkriterium wird zum Einstellen der Abstelleinrichtung **24** der Abstelleinrichtung **24** übermittelt. Das Abstellkriterium kann beispielsweise ein maximal zulässiges Drehmoment, eine maximal zulässige Anstiegsrate des Drehmoments, ein Auslösedrehmoment für eine Kupplung, eine Setztiefe für einen Tiefenanschlag sein.

Die Abstelleinrichtung **24** kann mit einem oder mehreren Überwachungssensoren elektrisch gekoppelt sein, um deren Signale auf ein oder mehrere Abstellkriterien hin zu überwachen.

Ein Überwachungssensor **50** erfasst beispielsweise eine Leistungsaufnahme des Motors **11.** Die Leistungsaufnahme des Motors **11** steigt typischerweise an, wenn das auf die Spindel **14** wirkende Drehmoment zunimmt. Die Abstelleinrichtung **24** kann beispielsweise die momentane Leistungsaufnahme gegen einen Schwellwert vergleichen, der als Abstellkriterium eingestellt ist. Alternativ oder zusätzlich wird die Leistungsaufnahme auf einen charakteristischen Verlauf hin überwacht.

Ein anderer Überwachungssensor **51** kann beispielsweise als Dehnungssensor unmittelbar das auf die Spindel **14** wirkende Drehmoment erfassen. Eine Auswertung und Überwachung seiner Signale erfolgt analog dem Überwachungssensor **50.**

Ein anderer Überwachungssensor **52** basiert auf einem mechanischen Tiefenanschlag **42.** Der Tiefenanschlag **42** hat einen Anschlag **53,** welcher die Werkzeugaufnahme **17** längs der Drehachse **15** um eine Distanz überragt. Der Anschlag **53** ist längs der Drehachse **15** verschiebbar gelagert. Der Tiefenanschlag **42** kann beispielsweise in Form der koaxial zur Drehachse **15** angeordneten Hülse **41** ausgebildet sein. Der Überwachungssensor **52** ermittelt eine Wegstrecke, um die der Tiefenanschlag **42** beim Schrauben verschoben wird. Der Überwachungssensor **52** kann beispielsweise ein Potentiometer enthalten. Die Abstelleinrichtung **24** überwacht die ermittelte Wegstrecke und vergleicht diese mit einer durch ein Abstellkriterium vorgegebene maximale Wegstrecke. Ein anderer Überwachungssensor 52 basiert auf einer inkrementellen Positionsmessung. Auf dem mechanischen Tiefenanschlag 42 kann beispielsweise ein Magnetband angeordnet sein. Die Abstelleinrichtung 24 summiert die Inkremente auf.

Ein anderer Überwachungssensor **55** basiert auf einem berührungslosen Tiefenanschlag mit einem berührungslosen Entfernungsmesser **56.** Der Entfernungsmesser **56** kann optisch, akustisch oder per Radartechnik eine Entfernung zu der Oberfläche des Werkstücks **20.** Die Abstelleinrichtung **24** schaltet die Drehbewegung ab, sobald ein Abstand des Schraubers **10** zu dem Werkstück **20** einen durch ein Abstellkriterium eingestellten Schwellwert unterschreitet.

Der Magnetfeldgenerator **39** des aktiven Magnetfeldsensors **38** kann ein Permanentmagnet sein. Bevorzugt ist ein Elektromagnet **39.** Der Elektromagnet **39** wird von einer Stromquelle **57** gespeist. Die Stromquelle **57** wird vorzugsweise aktiviert, wenn der Taster **13** betätigt ist, und stellt sich ab, wenn der Schraubentyp ermittelt ist oder der Motor **11** gestoppt ist. Eventuell anfallende Stahlspäne lösen sich dabei von dem Elektromagneten 39, bevor eine neue Schraube **19** von dem Benutzer oder aus einem Magazin zugeführt wird.

Die Stromquelle **57** kann einen Gleichstrom bereitstellen. In einer alternativen Variante wird auf den Versorgungsstrom des Elektromagneten **39** ein periodisches Signal von einem Oszillator **59** aufgeprägt. Das von dem Magnetfeldsensor **38** erzeugte Signal **44** wird phasenstarr ebenfalls mit dem periodischen Signal **58** gemischt und die Harmonischen des periodischen Signals **58** ausgefiltert. Die als Lock-In-Verstärkung bekannte Signalaufbereitung kann zur Verbesserung des Signal-zu-Rausch Verhältnisses angewandt werden.

Der aktive Magnetfeldsensor **38** kann mehrere induktive Sensorelemente **40** aufweisen, welche ringförmig um die Drehachse **15** angeordnet sind. Die Signale **44** werden durch einen Summierer **60** aufsummiert. Zwischen die Sensorelemente **40** und den Summierer **60** sind Verzögerungselemente **61** geschaltet. Die Verzögerungselemente **61** verzögern die Signale **44** in Abhängigkeit eines relativen Winkels, gemessen entgegen dem Drehsinn der Spindel **14,** des induktiven Sensorelements **40** zu einem letzten der Sensorelemente **40** und ggf. in Abhängigkeit einer Drehzahl der Spindel **14.** Eine Modulation durch eine Rippe **35** wird von den zwei Sensorelementen **40** zu unterschiedlichen Zeiten erfasst. Die Zeitdifferenz wird durch das Verzögerungselement **61** ausgeglichen, damit die Signale in dem Summierer **60** konstruktiv überlagert werden. Die Verzögerungselemente **61** können in Abhängigkeit der Drehzahl der Spindel **14** und ggf. des Drehsinns der Spindel **14** einstellbar sein.

Die Identifikation von Schrauben **19** anhand einer charakteristischen Modulation eines Magnetfeldes durch rotierende Prägungen **35** der Schraube **19** erweist sich als besonders robust, wenn die Identifikation wie beschrieben anhand eines Frequenzspektrums der Modulation erfolgt.

Alternativ kann die Modulation auch direkt anhand des im Zeitverlauf aufgenommenen Signals **44** ausgewertet werden. Beispielsweise meldet ein Triggerbaustein **62** jedes Mal ein Ereignis, wenn das Signal **44** einen Schwellwert überschreitet. Ein Zähler **63** ermittelt die Anzahl der Ereignisse für eine vorgegebene Anzahl von Umdrehungen der Schraube **19.** In der Speichereinrichtung **29** sind entsprechend für einen Schraubentyp die Anzahl der Ereignisse abgelegt. In einer weiteren alternativen Ausführungsform zeichnet ein Zwischenspeicher **64** die Ereignisse für eine Umdrehung auf. In der Speichereinrichtung **29** sind zugehörige Muster von Ereigniszeitverläufen für die Schraubentypen zusammen mit Abstellkriterien für den jeweiligen Schraubentyp abgelegt.

## Patentansprüche

1. Schrauber mit
einem Motor (**11**);
einer Spindel (**14**), die mit dem Motor (**11**) zum Drehen einer Schraube (**19**) um eine Drehachse (**15**) gekoppelt ist;
einer einstellbaren Abstelleinrichtung (**24**) zum Abstellen der Drehbewegung der Spindel (**14**);
einem aktiven Magnetfeldsensor (**38**), der derart angeordnet ist, dass eine durch die sich drehende Schraube (**19**) hervorgerufene Modulation eines von dem aktiven Magnetfeldsensor (**38**) erzeugten Magnetfeldes durch den aktiven Magnetfeldsensor (**38**) erfassbar ist;
einer Schraubenerkennungseinrichtung (**28**), die zwischen den aktiven Magnetfeldsensor (**38**) und die einstellbare Abstelleinrichtung (**24**) zum Einstellen eines Abstellkriteriums der Abstelleinrichtung (**24**) basierend auf der von dem aktiven Magnetfeldsensor (**38**) erfassten Modulation geschaltet ist.

2. Schrauber nach Anspruch 1, **dadurch gekennzeichnet, dass** ein magnetfeldsensitives Sensorelement (**40**) des aktiven Magnetfeldsensors (**38**) derart angeordnet ist, dass das magnetfeldsensitive Sensorelement (**40**) in Richtung der Drehachse (**15**) mit einem Schraubenkopf (**22**) der Schraube (**19**) überlappt.

3. Schrauber nach Anspruch 1 oder 2, **dadurch gekennzeichnet, dass** der aktive Magnetfeldsensor (**38**) einen Elektromagneten (**39**) aufweist, welcher an einem werkzeugseitigen Ende der Spindel (**14**) angeordnet ist.

4. Schrauber nach einem der vorhergehenden Ansprüche, **dadurch gekennzeichnet, dass** die Abstelleinrichtung (**24**) mit dem Motor (**11**) zum Abstellen des Motors (**11**) elektrisch gekoppelt ist.

5. Schrauber nach einem der vorhergehenden Ansprüche, **dadurch gekennzeichnet, dass** eine elektrisch betätigbare Kupplung (**25**) in einen Kraftpfad zwischen Motor (**11**) und Spindel (**14**) geschaltet ist und die Abstelleinrichtung (**24**) zum Schalten der Kupplung (**25**) mit der Kupplung (**25**) elektrisch verbunden ist.

6. Schrauber nach einem der vorhergehenden Ansprüche, **gekennzeichnet durch** einen Überwachungssensor (**51**, **52**, **55**), mit dem ein Signal als Maß für einen Abstand der Spindel (**14**) zu einem Werkstück (**20**) und/oder ein Signal als Maß für ein auf die Spindel (**14**) übertragenes Drehmoment erfassbar ist, und **dadurch** gekennzeichnet, dass die Abstelleinrichtung (**24**) mit dem Überwachungssensor (**51**, **52**, **55**) zum Vergleichen des Signals mit dem Abstellkriterium gekoppelt ist.

7. Schrauber nach einem der vorhergehenden Ansprüche, **dadurch gekennzeichnet, dass** die Schraubenerkennungseinrichtung (**28**) einen Frequenzanalysator (**46**) zum Bestimmen eines Spektrums der Modulation aufweist.

8. Schrauber nach einem der vorhergehenden Ansprüche, **dadurch gekennzeichnet, dass** die Schraubenerkennungseinrichtung (**28**) eine Speichereinrichtung (**29**) mit darin gespeicherten parametrisierten Modulationen und den parametrisierten Modulationen zugeordnete gespeicherte Abstellkriterium aufweist;
die Schraubenerkennungseinrichtung (**28**) eine Sucheinrichtung (**48**) zum Auswählen der Abstellkriterien, die einer parametrisierten Modulation zugeordnet sind, welche einer von dem aktiven Magnetfeldsensor (**38**) erfassten Modulation entsprechen, aufweist.

9. Schrauber nach einem der vorhergehenden Ansprüche, **dadurch gekennzeichnet, dass** der aktive Magnetfeldsensor (**38**) mehrere ringförmig um die Drehachse (**15**) angeordnete induktive Sensorelemente (**40**) aufweist, und den Sensorelementen (**40**) jeweils ein Verzögerungsglied (**61**) zum Verzögern einer Signallaufzeit nachgeschaltet ist.

10. Steuerungsverfahren für einen Schrauber mit den Schritten:
Antreiben einer Spindel (**14**) mittels eines Motors (**11**) zum Drehen einer Schraube (**19**) um eine Drehachse (**15**);
Erzeugen eines Magnetfeldes im Bereich der sich drehende Schraube (**19**);
Erfassen einer durch die sich drehende Schraube (**19**) hervorgerufene Modulation des Magnetfelds mittels eines aktiven Magnetfeldsensors (**38**);
Auswählen eines Abstellkriteriums basierend auf der erfassten Modulation durch eine Schraubenerkennungseinrichtung (**28**);
Abstellen des Drehens der Schraube (**19**) durch eine Abstelleinrichtung (**24**), sobald das Abstellkriterium erfüllt ist.

11. Steuerungsverfahren nach Anspruch 10, **dadurch gekennzeichnet, dass** die Abstelleinrichtung (**24**) den Motor (**11**) beim Erfüllen des Abstellkriteriums deaktiviert.

12. Steuerungsverfahren nach Anspruch 10 oder 11, **dadurch gekennzeichnet, dass** die Abstelleinrichtung (**24**) ein Steuersignal zum Lösen an eine Kupplung (**25**) zwischen Motor (**11**) und Spindel (**14**) bei Erfüllen des Abstellkriteriums zum Abstellen des Drehens der Schraube (**19**) übermittelt.

13. Steuerungsverfahren nach einem der Ansprüche 10 bis 12, **dadurch gekennzeichnet, dass** ein Frequenzspektrum der Modulation ermittelt wird und das Abstellkriterium basierend auf dem Frequenzspektrum ausgewählt wird.

14. Steuerungsverfahren nach einem der Ansprüche 10 bis 13, **dadurch gekennzeichnet, dass** ein Überwachungssensor (**51**, **52**, **55**) ein Signal als Maß für einen Abstand der Spindel (**14**) zu einem Werkstück (**20**) und/oder ein Signal als Maß für ein auf die Spindel (**14**) übertragenes Drehmoment erfasst, und **dadurch gekennzeichnet, dass** die Abstelleinrichtung (**24**) das erfasste Signal mit dem Abstellkriterium vergleicht.

15. Steuerungsverfahren nach einem der Ansprüche 10 bis 14, **dadurch gekennzeichnet, dass** das Auswählen eines Abstellkriteriums ein Auswählen eines Abstellkriteriums aus einer Speichereinrichtung (**29**) beinhaltet, wobei eine Sucheinrichtung (**48**) das Abstellkriterium auswählt, dessen in der Speichereinrichtung (**29**) zugeordnet abspeicherte parametrisierte Modulation dem von dem aktiven Magnetfeldsensor (**38**) erfassten Modulation entspricht.
